# EUROPEAN PATENT SPECIFICATION

(11) **EP 3 147 886 B1**
(45) Date of publication and mention of the grant of the patent: **06.11.2019**
(21) Application number: 16189555.2
(22) Date of filing: 20.09.2016
(51) Int. Cl.: G08G 5/00, G08G 5/06, G06F 3/00, G01C 21/36, G06F 3/023

(54) **DATABASE DRIVEN INPUT SYSTEM**
DATENBANKGESTEUERTES EINGABESYSTEM
SYSTÈME D'ENTRÉE GUIDÉ PAR BASE DE DONNÉES

(30) Priority: 23.09.2015 US 201514862798
(43) Date of publication of application: 29.03.2017
(73) Proprietor: Honeywell International Inc., Morris Plains, NJ 07950 (US)
(72) Inventor: WANG, Rui, Morris Plains, NJ 07950 (US); GUO, Fenfei, Morris Plains, NJ 07950 (US); HE, Gang, 07950, NJ 07950 (US); FEYEREISEN, THEA L., Morris Plains, NJ 07950 (US); ZHANG, Yong, Morris Plains, NJ 07950 (US); CONNER, Kevin J., Morris Plains, NJ 07950 (US)
(74) Representative: Houghton, Mark Phillip

(56) References cited:
- EP-A2- 2 075 547
- US-A1- 2003 105 579
- US-A1- 2011 313 645

## Description

### TECHNICAL FIELD

The present disclosure generally relates to aircrafts, and more particularly relates to input devices for aircrafts.

### BACKGROUND

Pilots generally receive taxi route instructions for navigating through an airport from air traffic control. However, navigating through airports, even when following the taxi route instructions, can be difficult due to the complexity of some airports or conditions such as fog, rain, snow or the like. Accordingly, some aircraft are equipped with taxi navigation systems, which when programmed with the taxi route can aid a pilot in navigating the airport. However, air traffic control typically dictates the taxi route instructions at a very fast rate; thereby preventing a pilot from entering in the instruction is the taxi navigation system as air traffic control is dictating the instructions. Typically pilots will write down the taxi route instructions on a piece of paper and thereafter input the taxi route instructions into the taxi navigation system.

Patent document number US2011/313645A1 describes a system and method for aircraft taxiing and guidance using the ground station's communication network. In a method of aircraft taxiing and guidance, a communication link between an aircraft computing system and a ground station system is established using a communication network provided by the ground station system. An aircraft taxi selection and guidance application residing in the aircraft computing system is displayed on a display device upon establishing the communication link. Further, one or more pilot selectable taxiing and ground services are displayed upon selecting the aircraft taxi selection and guidance application. One of the displayed pilot selectable taxiing and ground services is selected by a pilot of an aircraft. Information associated with the selected pilot selectable taxiing and ground service is then displayed on the display device using ground station data. The aircraft is taxied and guided by the pilot using displayed information.

Patent document number EP2075547A2 describes a method and system for identifying a user's desired destination in a navigation system. The method includes the steps of storing potential desired destination names in a database, providing a user with an on-board data entry device having data entry keys, receiving consecutive characters of a first portion of the user's desired destination from the data entry device, identifying potential desired destination names based upon the consecutive characters received from the data entry device, identifying invalid keys which do not represent characters of any remaining portion of the potential desired destination names, and disabling the invalid keys on the data entry device such that they cannot be selected by the user.

### BRIEF SUMMARY

The present invention in its various aspects is as set out in the appended claims.

In one embodiment, for example, an input device in an aircraft according to claim 1 is provided.

In another embodiment, for example, a method for operating a database driven taxiway input interface in an aircraft according to claim 10 is provided.

### BRIEF DESCRIPTION OF THE DRAWINGS

The detailed description will hereinafter be described in conjunction with the following drawing figures, wherein like numerals denote like elements, and wherein:
FIG. 1 is a block diagram of an exemplary database driven input system for an aircraft, in accordance with an embodiment;
FIG. 2 is a flow chart illustrating an exemplary method for operating the database driven input system, in accordance with an embodiment; and
FIG. 3 illustrates an exemplary input device in accordance with an embodiment;
FIG. 4 illustrates another exemplary input device in accordance with an embodiment;
FIG. 5 illustrates yet another exemplary input device in accordance with an embodiment;
FIG. 6 illustrates another exemplary input device in accordance with an embodiment;
FIG. 7 illustrates yet another exemplary input device in accordance with an embodiment;
FIG. 8 illustrates an exemplary updated database driven taxiway input interface for display on a display of the I/O system of the input device, in accordance with an embodiment;
FIG. 9 illustrates another exemplary updated database driven taxiway input interface for display on a display of the I/O system of the input device, in accordance with an embodiment; and
FIG. 10 illustrates yet another exemplary updated database driven taxiway input interface for display on a display of the I/O system of the input device, in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

As discussed above, air traffic control generally verbally dictates a taxi route at a rate that does not allow a traditional input system, such as traditional control display units, to be used to input the taxi route into a computer while receiving the verbal instructions from air traffic control. Generally, pilots are forced to write down the taxi route on paper and then input the taxi route into a guidance system to display the taxi route. Accordingly, as discussed in further detail below, a database driven input system is provided which allows a crew member to quickly and efficiently enter the dictated taxi route in an input device while the taxi route is being verbally dictated by air traffic control, thereby decreasing workload on pilots by eliminating a step in typical aircraft operation.

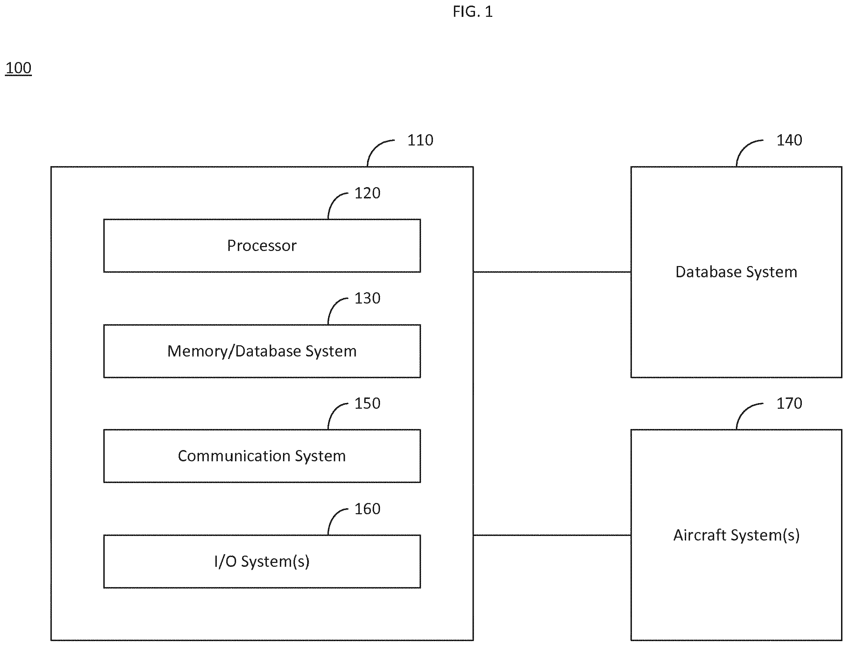

FIG. 1 is a block diagram of an exemplary database driven input system 100 for an aircraft, in accordance with an embodiment. The database driven input system 100 includes at least one input device 110. In one embodiment, for example, the input device 110 may be a portable electronic device such as a tablet computer, a laptop computer, a cellular phone, or the like. In this embodiment, for example, the input device could either be a fixture (i.e., either left in the aircraft or installed in the aircraft in any fashion) in the aircraft, or carried in by a member of the crew of the aircraft. In another embodiment, for example, the input device may be integrated into one or more other aircraft systems, such as a flight management system, a control display unit (CDU), or the like.

The input device 110 includes a processor 120. The processor 120 may be a central processing unit (CPU), a graphics processing unit (GPU), a field programmable gate array (FPGA), an application specific integrated circuit (ASIC), a microcontroller, or any other logic device or combination thereof. As discussed in further detail below, the processor 120 controls the operation of the database driven input system 100.

The input device 110 further includes a memory 130. The memory 130 may be any combination of volatile and non-volatile memories. The memory 130 may store non-transitory computer-readable instructions, which when executed by the processor 120, implement the database driven input system 100, as discussed in further detail below.

In one embodiment, for example, the memory 130 may also store at least a portion of a database used by the database driven input system 100 to improve input efficiency and reduce false inputs, as discussed in further detail below. The database, or a portion thereof, used by the database driven input system 100 may also be stored in one or more remote database system(s) 140 relative to the input device 110. The remote database system(s) 140 may be, for example, part of the aircraft. In other words, the database system may be a memory system separate from the input device 110 within the aircraft which the input device 110 can access. The database system 140 may also be part of one or more one or more remote servers. The remote servers may be operated at one or more airports or any other location.

The database stored in the memory 130 and/or the database system(s) 140 include airport information on one or more airports. The airport information includes detailed maps of each of the airports including each runway, taxiway, terminal, gate, parking stand, fixed base operator (FBO), customer waypoint, building, obstructions, or the like. As discussed in further detail below, the airport information in the database can be utilized to simplify the input processes and reduce false input of taxi instructions into the database driven input system 100.

In one embodiment, for example, the input device 110 may include on or more communication systems 150. The communication systems may be any wired or wireless communication system, including, but not limited to, a cellular communication system, a WIFI communication system, a Bluetooth communication system, a ZigBee communication system, a USB communication system, a HDMI communication system, an Ethernet communication system, or the like or any combination thereof. The communication system(s) 150 may be used to update the database in the local memory 130, access a remote database system 140, communicate with one or more aircraft systems 170, or a combination thereof. The aircraft system(s) 170 can include, but are not limited to a flight management system (FMS), a central display unit (CDU), a global positioning system (GPS), an aircraft display, a multi-function display (MFD), an airborne heading-altitude reference system (AHARS), portable GPS or AHARS devices, or the like. As discussed in further detail below, the processor 120 of the input device 110 may utilize the communication system 150 to retrieve information from an aircraft system 170, such as the aircrafts current location and heading, flight plan (including origin location and destination location), and the like.

The input device 110 further includes an I/O system 160. In one embodiment, for example, the I/O system may be a touchscreen display. However, the I/O system may include any combination of a non-touch display, a touchscreen display, a keyboard, a mouse, a scroll wheel, one or more dedicated or dynamic buttons, or the like. As discussed in further detail below, the processor 120 utilizes the database stored in the memory 130 or the remote database 140 to generate a database driven taxiway input interface to input a taxi route dictated by air traffic control. The I/O system 160 is utilized to display the driven taxiway input interface and receive input to the driven taxiway input interface.

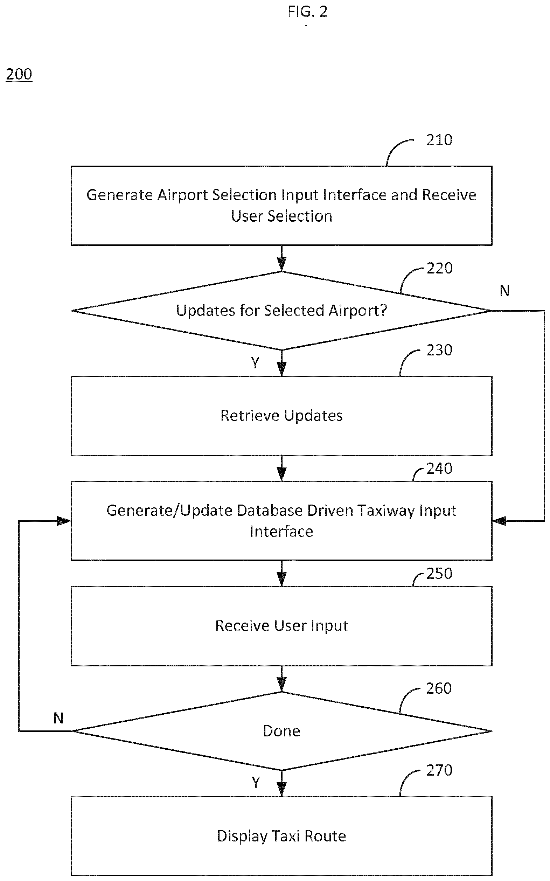

FIG. 2 is a flow chart illustrating an exemplary method 200 for operating the database driven input system 100, in accordance with an embodiment. The processor 120 of the input device 110 may first generate and display an airport selection interface to receive a user selection of the airport. (Step 210). In one embodiment, for example, the processor 120 may communicate with one of the aircraft systems 170 via the communication system 150 to determine one or more airports to display as possible quick selections. As discussed above, one of the aircraft systems 170 may be a flight management system. The flight management system may store a flight plan including an origin and a destination airport as well as track an aircraft's flight path. Accordingly, the processor 120, based upon flight plan information received from a flight management system, may generate an interface displaying the origin airport and/or the destination airport as quick airport selections.

In another embodiment, for example, the aircraft system 170 could also be a global positioning system (GPS). Accordingly, the processor 120, based upon global positioning data received from the aircraft system 170, may generate one or more quick airport selections based upon the current location of the aircraft. For example, if the aircraft is in the air or on the ground, the processor 120 may select one or more of the closest airports to the aircraft as quick airport selections. In one embodiment, for example, the communication system 150 could also include a GPS receiver. Accordingly, the processor 120 could also determine one or more quick airport selections based upon the data from the local GPS receiver rather than communicating with an aircraft system 170.

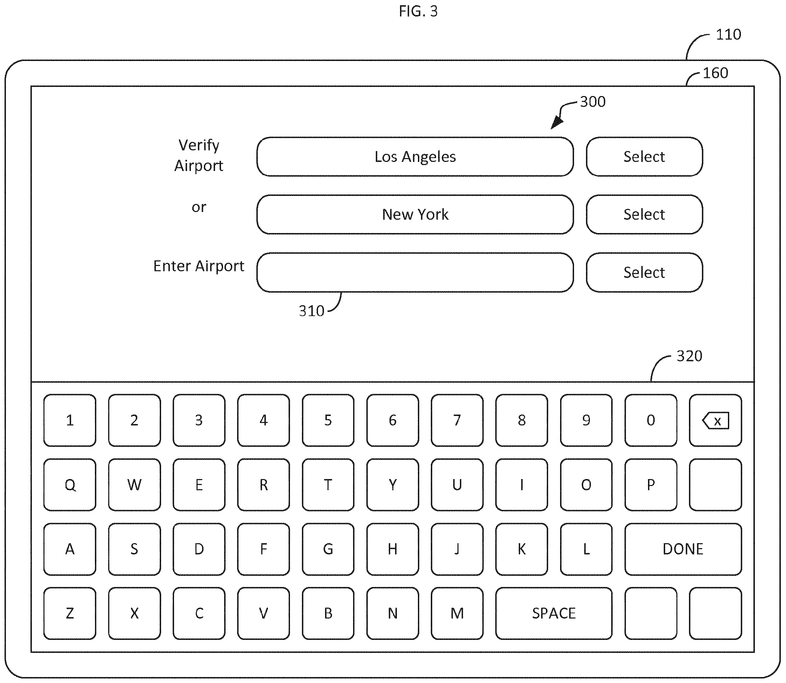

FIG. 3 illustrates an exemplary input device 110 in accordance with an embodiment. In particular, FIG. 3 illustrates an exemplary airport selection interface generated by the processor 120 for display on a display of the I/O system 160. As seen in FIG. 3, two quick airport selections 300 are displayed, one for Los Angeles and one for New York. As discussed above, the quick airport selections 300 may be based upon data from an aircraft system 170 or from a communication system 150 of the input device 110. The user also has the option to enter in a different airport in a separate input interface 310 utilizing a keyboard 320.

Returning to FIG. 2, the processor 120, upon receiving the selected airport, determines if there are any updates for the airport information associated with the airport. (Step 220). In one embodiment, for example, the processor 120 may utilize the communication system 150 to contact a database system 140 or another remote server to determine if the airport information stored in the memory 130 is current. Temporary or permanent closures, construction and the like can alter available taxiway pathways. Accordingly, by ensuring that the database used to generate the database driven input system 100 is up to date, the database driven input system 100 can take into account any changes to an airport when generating the input interface, as discussed in further detail below.

When the processor 120 determines that an update is needed, the processor 120 utilizes the communication system 150 to retrieve the update from the update source. (Step 230). The update source may be the database system 140 or another server monitoring conditions at the airport.

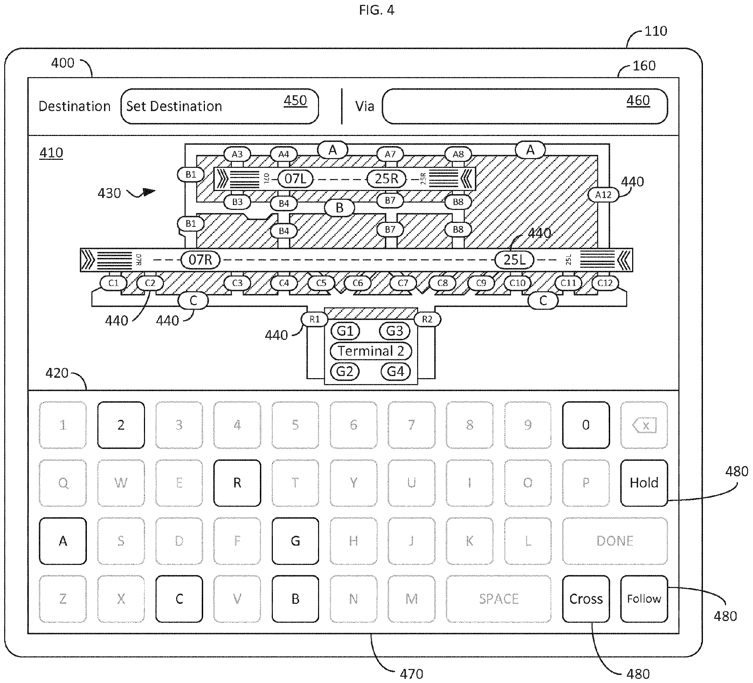

The processor 120 than generates a database driven taxiway input interface based upon the airport information associated with the selected airport. (Step 240). FIG. 4 illustrates an exemplary input device 110 in accordance with an embodiment. In particular, FIG. 4 illustrates an exemplary database driven taxiway input interface 400 for display on a display of the I/O system 160, in accordance with an embodiment. The database driven taxiway input interface 400 includes a database driven map input interface 410 and a database driven keyboard input interface 420.

The database driven map input interface 410 displays a map 430 of the airport selected in Step 210 as well as numerous labels 440 corresponding to locations at the selected airport, including, but not limited to, terminals, gates, parking spots, hangars, taxiways, runways and the like. Each label 440 can be interacted with to add the corresponding airport feature as a destination or as via to the destination. As discussed above, in one embodiment, for example, the I/O system 160 can include a touchscreen display. As such, in this embodiment a user merely has to touch a label 440 for a corresponding airport location to add the location as a destination or as a via. However, in other embodiments, a mouse, stylus, trackball, or the like could also be used to interact with and select airport locations on the database driven map input interface 410.

In order to select a label 440 corresponding to an airport location as a destination or a via, the user can interact with either a destination interface 450 or a via interface 460. In operation, a user merely has to interact with the destination interface 450 and one of the labels 440 to select the corresponding airport location as the taxi destination. When selecting the pathway to the destination, the user merely interacts with the via interface 460 a single time then can select multiple labels 440 to select the corresponding pathway to the destination. As discussed in further detail below, the database driven map input interface 410 may be updated after each selection to display the taxi pathway to the user. When the I/O system 160 includes a touchscreen display, the database driven map input interface may be interacted with using touch controls to zoom in the airport map or scroll around the airport map. For example, a user could pinch to zoom, tap to zoom, interface with dedicated zoom buttons or scrolls, utilize a dedicated scroll interface to scroll around the map or simply use their finger to scroll around the map. Alternatively, or in combination with the touchscreen controls, the input device 110 may include dedicated or dynamic hardware buttons (not illustrated) to zoom, scroll or otherwise interact with the database driven map input interface 410.

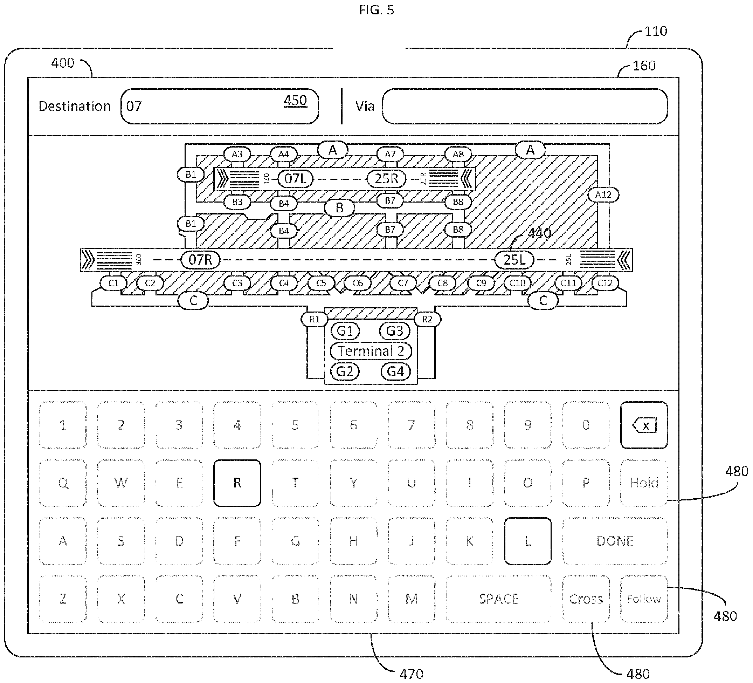

The database driven keyboard input interface 420 displayed on the I/O system 160 includes a smart virtual keyboard 470. The smart virtual keyboard 470 is dynamically updated as a user makes selections to disable and/or eliminates keys which are unnecessary keys based upon the airport data in the database. For example, the airport map illustrated in FIG. 4 includes a terminal 2, with gates G1-A4, taxiways A, A3, A4, A7, A8, A12, B, B1, B3, B4, B7, B8, C, C1-C12, R1 and R2, and runways 07L, 07R, 25L and 25R. While not illustrated in the exemplary airport map in FIG. 4, airport maps may also include parking stands, hangars or any other airport feature. As such, the first letter of any possible destination or via illustrated in the exemplary airport map is limited to A, B, C, G, R, 0 and 2 for the respective taxiways, runways or gates. In this embodiment, every other key is disabled, as suggested by the lighter lines surrounding the respective disabled keys, preventing the disabled keys from being entered as input. By disabling the unnecessary keys according to the database, input efficiency is increased as the crew of the aircraft cannot enter in an invalid value. FIG. 5 further illustrates this principal.

FIG. 5 illustrates an exemplary input device 110 in accordance with an embodiment. In particular, FIG. 5 illustrates an exemplary database driven taxiway input interface 400 for display on a display of the I/O system 160, in accordance with an embodiment. As seen in FIG. 5, a user has typed in "07" into the destination interface 450. The processor 120, based upon the airport information in the database, determines that the only possible input after "07" can be an "R" or an "L" corresponding to runway 07R and runway 07L. As such, every key on the smart keyboard 470 except for the R key, the L key and a delete key (for a user to delete a previously entered valid input) have been disabled from the keyboard thereby reducing, if not eliminating, the chance that an unintended input will be entered into the input device 110.

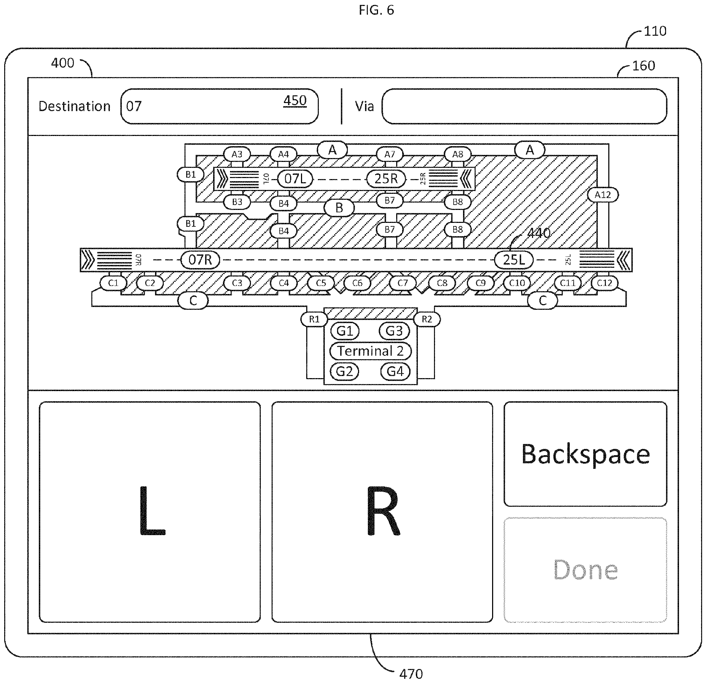

FIG. 6 illustrates an exemplary input device 110 in accordance with an embodiment. In particular, FIG. 6 illustrates an exemplary database driven taxiway input interface 400 for display on a display of the I/O system 160, in accordance with an embodiment. In FIG. 6, a user has typed 07 into the destination interface 450 as also illustrated in FIG. 5. However, in the embodiment illustrated in FIG. 6, the unnecessary keys from the keyboard have been eliminated, rather than disabled. As seen in FIG. 6, the processor 120 has resized and rearranged keys of the smart keyboard to enlarge the remaining possible input characters L and R to make the remaining valid input selections easier to find on the smart keyboard 470 as well as easier to select. The processor 120 may choose to eliminate keys from the smart keyboard 470 rather than disabling the keys based upon a status of the aircraft. Turbulence, for example, may make the keys illustrated in FIGS. 4 and 5 difficult to accurately touch. Accordingly, if an aircraft system 170 reports turbulence to the input device 110, the processor may select to remove keys to counter the effect of the turbulence. Likewise, in cold weather where a user may be wearing gloves, the larger keys may be easier to use. Accordingly, if an aircraft system 170 reports cold weather to the input device 110, the processor may select to remove keys to counter the effect of the cold weather.

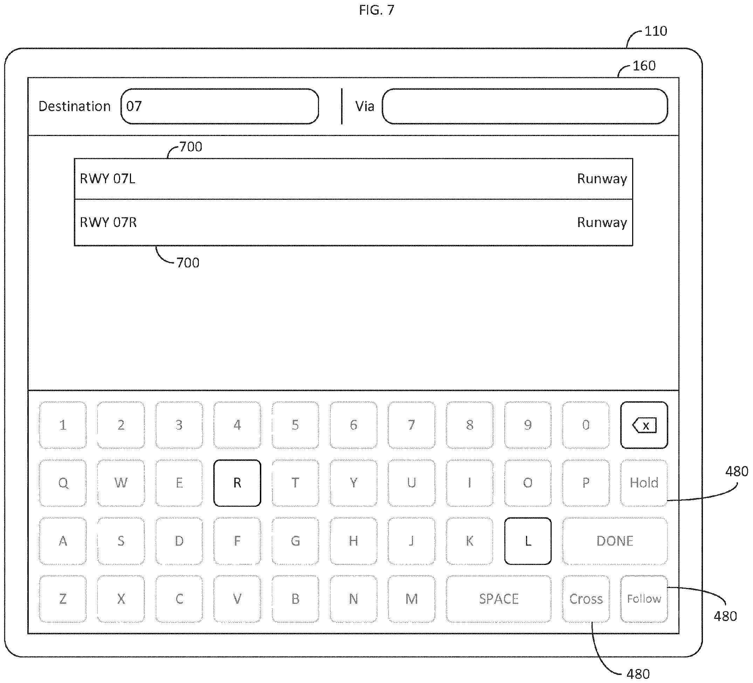

FIG. 7 illustrates an exemplary input device 110 in accordance with an embodiment. In particular, FIG. 7 illustrates an exemplary database driven taxiway input interface 400 for display on a display of the I/O system 160, in accordance with an embodiment. In this embodiment, the processor 120 has displayed multiple autocomplete quick selections 700 based upon input to the destination interface 450. As with the previous examples, the user has entered in 07 into the destination interface 450 utilizing the smart keyboard 470. The processor 120 can filter through the airport information to identify the possibly airport locations which the user may be trying to enter. In this example, the runways 07L and 07R are listed. A user may then simply interface with one of the autocomplete quick selections 700 to select the desired airport location. As another example, if the user types the character B into one of the destination interface 450 or the via interface 460, the processor may generate autocomplete entries 700 including B1, B3, B4, B7 and B8 allowing the user to quickly select the desired airport location without typing in the entire location. In one embodiment, for example, the autocomplete entries may be prioritized based upon whether the user is entering a destination or a via. For example, when entering a destination a runway, parking stand or terminal would have a higher priority than taxiways, and, thus, would be presented before taxiways. When entering a via taxiways may be selected as having the highest priority, and, thus, matching taxiways to the user's initial input may be presented first.

As seen in FIGS. 4-5 and 7, the smart keyboard 470 may further include one or more quick keys 480. The quick keys illustrated in FIGS. 4-5 and 7 are a hold short key ("Hold"), a cross key ("Cross"), and a follow key ("follow"). These quick keys may be used to quickly enter the respective instruction without having to spell out the complete instruction. While the smart keyboard 470 illustrated in FIGS. 4-5 and 7 include three quick keys 480, any number of smart keys may be included. Other quick keys that could be generated include an intersection key, a takeoff key, or the like. In one embodiment, for example, the quick keys may be dynamically updated based upon the data in the database, as discussed in further detail below.

In one embodiment, for example, after a follow quick key is selected, indicating that an instruction to follow another aircraft to a destination has been received, the processor 120 may further update the database driven map interface 410 or the database driven keyboard interface 420 to speed up the process of entering an aircraft identifier. For example, the smart keyboard 470 may be updated to reflect one or more airlines which operate out of the same airport. In one embodiment, for example, the processor 120 may utilize the communication system 150 to receive traffic information such as other aircraft scheduled to depart around a similar time. In this embodiment, for example, possible aircraft to follow may be presented as quick selections 700 as illustrated in FIG. 7.

Returning to FIG. 2, after generating the database driven taxiway input interface, the processor 120 receives user input from the I/O system 160. (Step 250). As discussed above, the user input may be in the form of a map input, a character input to the smart keyboard, or an autocomplete airport location quick select input.

The processor 120 then determines if the taxiway input is complete. (Step 260). In one embodiment, for example, the processor may determine that the taxiway input is complete when a user signals the taxiway input is complete via an input to the I/O system 160, for example, when a user touches the "done" button illustrated in FIGS. 4-6. The processor 120 may also determine that the taxiway input is complete by analyzing the path entered into the I/O system 160 to determine if the path from a current location of the aircraft to the destination is complete and correct. In this embodiment, for example, the processor may analyze the airport information in the database to determine if the taxiway input is complete. For example, the processor may analyze each input airport location to determine that the selected pathways lead from the current location to the destination. Using the airport map illustrated in FIGS. 4-6 as an example, suppose the current location of the aircraft is at gate G4 of terminal 2 and the destination entered by the pilot is Runway 07L via R1, C, C4, Cross 07R, B4, B, B3. In this example, the processor would analyze each pair of instructions (i.e., (R1, C), (C, C3), (C3, Cross 07R), (Cross 07R, B1), etc.) to verify that the selected vias complete a path from the current location to the destination.

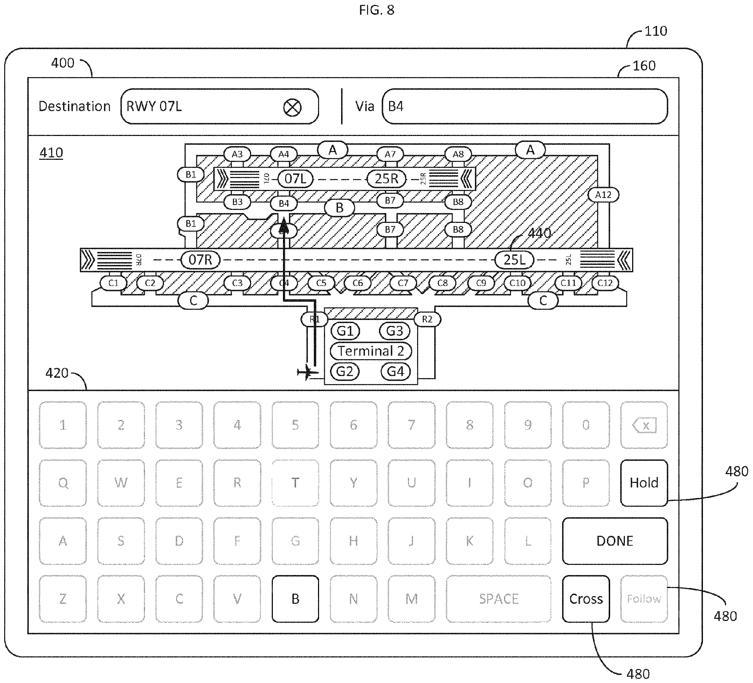

When the processor 120 determines the taxiway input is incomplete, the processor 120 returns to Step 240 to update database driven taxiway input interface based upon the airport information associated with the selected airport and the previously received input. FIG. 8 illustrates an exemplary updated database driven taxiway input interface 400 for display on a display of the I/O system 160 of the input device 110, in accordance with an embodiment. In this exemplary example, a user has entered a destination of 07L and via instructions of via R1, C, C4, Cross 07R, B4. As illustrated in FIG. 8, the database driven map interface 410 has been updated to reflect the taxiway path input by the user thus far. The database driven keyboard input interface 420 has also been updated to reflect possibly valid input that a user could enter. As seen in FIG. 8 the letter B, as well as the quick key 480 for hold short ("Hold"), and follow are available. The processor determines which letters of the smart keyboard and which quick keys are available using the airport information stored in the database. The database may be set up in such a way that based upon a current location and a direction of travel, the processor 120 can determine the valid subsequent airport locations and instructions. For example, the database entry of taxiway path B4 may be set up as follows:

| B4 | | |
|---|---|---|
| Direction | North | South |
| Valid Pathways | B | B, Runway 07R |
| Valid Quick Keys | Hold, Follow | Hold, Cross, Follow |

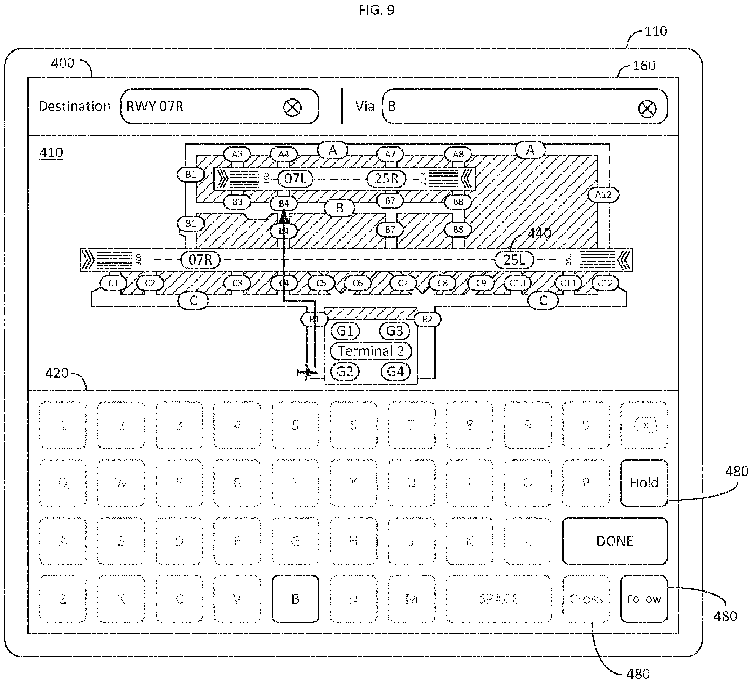

If the user were to enter B into the input, the processor would update the database driven taxiway input interface to reflect further valid input. FIG. 9 illustrates an exemplary updated database driven taxiway input interface 400 for display on a display of the I/O system 160 of the input device 110, in accordance with an embodiment. As illustrated in FIG. 9, the database driven map interface 410 has been updated to reflect the taxiway path input by the user thus far. The database driven keyboard input interface 420 has also been updated to reflect possibly valid input that a user could enter. As seen in FIG. 9 the letter B (as taxiways B1, B3, B4, B7 and B8 are valid vias), as well as the quick key 480 for hold short ("Hold") and Follow are available. As discussed above, the processor 120 determines what letters of the smart keyboard and which quick keys are available using the airport information stored in the database. The database entry of Taxiway B may be set up as follows:

| Taxiway B | | |
|---|---|---|
| Direction | East | West |
| Valid Pathways | B3, B4, B7, B8 | B1, B3, B4, B7 |
| Valid Quick Keys | Hold, Follow | Hold, Follow |

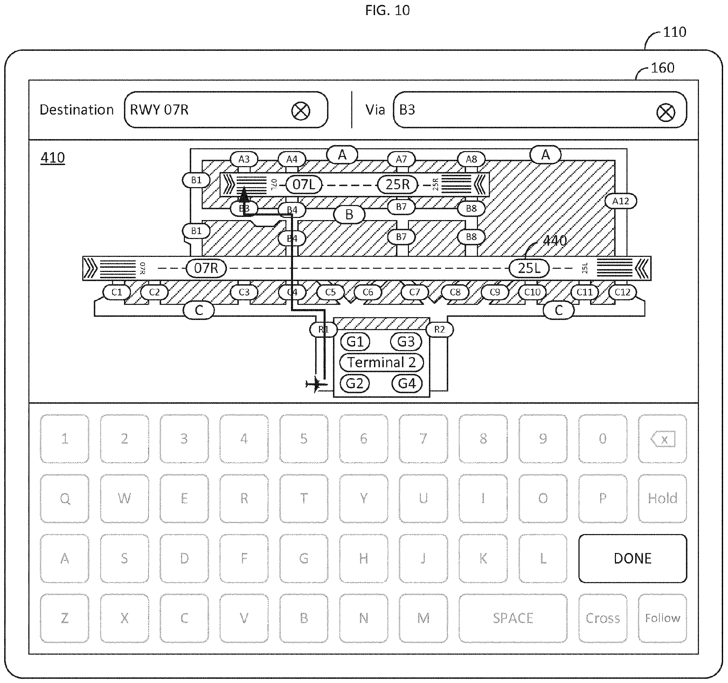

Returning to FIG. 2, when the processor 120 determines that the taxi route is complete in Step 260, the processor 120 displays the final taxi route on a display. (Step 270). In one embodiment, for example, the final taxi route may be displayed on the database driven map interface 410. FIG. 10 illustrates an exemplary updated database driven taxiway input interface 400 for display on a display of the I/O system 160 of the input device 110, in accordance with an embodiment. As illustrated in FIG. 10, the database driven map interface 410 includes the final taxi route as well as the current location of the aircraft. The database driven map interface 410 may thereafter be updated to reflect the current position of the aircraft as the aircraft taxis through the airport. However, in other embodiments, the taxi route entered into the input device 110 may be exported to another display on the aircraft via the communication system 150.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An input device (110) in an aircraft, comprising:
a memory (130) configured to store a database comprising airport information;
a touchscreen display (160); and
a processor (120) communicatively coupled to the touchscreen display and the database system, the processor configured to:
generate a database driven taxiway input interface comprising a database driven keyboard input interface (420), the database driven keyboard input interface comprising a smart keyboard (470) configured to prevent invalid input based upon the airport information in the database;
display the database driven taxiway input interface on the touchscreen display, the smart keyboard enabling only one or more valid input keys based upon a current location and a direction of travel of the aircraft;
receive an input from the touchscreen display; determine valid subsequent airport locations and instructions based upon the airport information in the database;
dynamically update the database driven keyboard input interface based upon the input to the touchscreen display if the taxiway input is incomplete.

2. The input device of claim 1, wherein the processor is further configured to prevent invalid input based upon the airport information in the database by disabling one or more keys of the smart keyboard which does not correspond to a valid airport location of the airport information.

3. The input device of claim 1, wherein the processor is further configured to prevent invalid input based upon the airport information in the database by eliminating one or more keys of the smart keyboard which does not correspond to a valid airport location of the airport information.

4. The input device of claim 3, wherein the processor is further configured to enlarge remaining keys of the smart keyboard.

5. The input device of claim 1, wherein the processor is further configured to generate one or more quick keys based upon the airport information stored in the database.

6. The input device of claim 1, wherein the processor is further configured to generate, in response to receiving the input from the touchscreen display, one or more autocomplete entries identifying one or more locations based upon the airport information in the database.

7. The input device of claim 1, wherein the processor is further configured to:
receive, from the touch screen display, a selection of a specific airport; and
generate the database driven taxiway input interface based upon airport information in the database corresponding to the specific airport.

8. The input device of claim 1, wherein database driven taxiway input interface further comprises a database driven map input interface comprising a map of an airport and a plurality of selectable labels each corresponding to a different location at the airport according to the airport information in the database.

9. The input device of claim 1, wherein the processor is configured to track a taxiway pathway based upon touchscreen input to the database driven map input interface and the database driven keyboard input interface.

10. A method for operating a database driven taxiway input interface (400) in an aircraft, comprising:
receiving, by a processor (120), an identification of an airport;
generating, by the processor, the database driven taxiway input interface comprising a database driven keyboard input interface (420), the database driven keyboard input interface comprising a smart keyboard (470) configured to prevent invalid input based upon airport information associated with the identified airport in a database;
displaying, by the processor, the database driven taxiway input interface on the touchscreen display, the smart keyboard enabling only one or more valid input keys based upon a current location and a direction of travel of the aircraft;
receiving, by the processor, an input from the touchscreen display; determining valid subsequent airport locations and instructions based upon the airport information in the database;
dynamically updating the database driven keyboard input interface based upon the input to the touchscreen display if the taxiway input is incomplete.

## Patentansprüche

1. Eingabegerät (110) in einem Luftfahrzeug, umfassend:
einen Speicherbaustein (130), der dafür ausgelegt ist, eine Flughafeninformationen umfassende Datenbank zu speichern;
ein Touchscreen-Display (160); und
einen kommunikativ an das Touchscreen-Display und das Datenbanksystem gekoppelten Prozessor (120), wobei der Prozessor für Folgendes ausgelegt ist:
Generieren einer datenbankgesteuerten Rollbahneingabeoberfläche, die eine datenbankgesteuerte Tastatureingabeoberfläche (420) umfasst, wobei die datenbankgesteuerte Tastatureingabeoberfläche eine intelligente Tastatur (470), die dafür ausgelegt ist, ungültige Eingaben basierend auf den Flughafeninformationen in der Datenbank zu verhindern, umfasst;
Anzeigen der datenbankgesteuerten Rollbahneingabeoberfläche auf dem Touchscreen-Display, wobei die intelligente Tastatur nur eine oder mehrere gültige Eingabetasten basierend auf einem aktuellen Ort und einer Bewegungsrichtung des Luftfahrzeugs freigibt;
Empfangen einer Eingabe vom Touchscreen-Display;
Ermitteln von gültigen, späteren Flughafenorten und Anweisungen basierend auf den Flughafeninformationen in der Datenbank;
dynamisches Aktualisieren der datenbankgesteuerten Tastatureingabeoberfläche basierend auf der Eingabe in das Touchscreen-Display, wenn die Rollbahneingabe unvollständig ist.

2. Eingabegerät nach Anspruch 1, wobei der Prozessor ferner dafür ausgelegt ist, ungültige Eingaben basierend auf den Flughafeninformationen in der Datenbank durch Sperren einer oder mehrerer Tasten der intelligenten Tastatur, die nicht mit einem gültigen Flughafenort der Flughafeninformationen korrespondieren, zu verhindern.

3. Eingabegerät nach Anspruch 1, wobei der Prozessor ferner dafür ausgelegt ist, ungültige Eingaben basierend auf den Flughafeninformationen in der Datenbank durch Eliminieren einer oder mehrerer Tasten der intelligenten Tastatur, die nicht mit einem gültigen Flughafenort der Flughafeninformationen korrespondieren, zu verhindern.

4. Eingabegerät nach Anspruch 3, wobei der Prozessor ferner dafür ausgelegt ist, übrige Tasten der intelligenten Tastatur zu vergrößern.

5. Eingabegerät nach Anspruch 1, wobei der Prozessor ferner dafür ausgelegt ist, eine oder mehrere Schnelltasten basierend auf den in der Datenbank gespeicherten Flughafeninformationen zu generieren.

6. Eingabegerät nach Anspruch 1, wobei der Prozessor ferner dafür ausgelegt ist, als Reaktion auf das Empfangen der Eingabe vom Touchscreen-Display einen oder mehrere Einträge zum automatischen Vervollständigen, die einen oder mehrere Orte identifizieren, basierend auf den Flughafeninformationen in der Datenbank zu generieren.

7. Eingabegerät nach Anspruch 1, wobei der Prozessor ferner für Folgendes ausgelegt ist:
Empfangen einer Auswahl eines bestimmten Flughafens vom Touchscreen-Display; und
Generieren der datenbankgesteuerten Rollbahneingabeoberfläche basierend auf Flughafeninformationen in der Datenbank, die mit dem bestimmten Flughafen korrespondieren.

8. Eingabegerät nach Anspruch 1, wobei die datenbankgesteuerte Rollbahneingabeoberfläche ferner eine datenbankgesteuerte Karteneingabeoberfläche umfasst, die eine Karte eines Flughafens und eine Vielzahl auswählbarer Bezeichnungen, die je mit einem anderen Ort am Flughafen gemäß den Flughafeninformationen in der Datenbank korrespondieren, umfasst.

9. Eingabegerät nach Anspruch 1, wobei der Prozessor dafür ausgelegt ist, einen Rollbahnweg basierend auf einer Touchscreen-Eingabe in die datenbankgesteuerte Karteneingabeoberfläche und die datenbankgesteuerte Tastatureingabeoberfläche zu verfolgen.

10. Verfahren zum Betreiben einer datenbankgesteuerten Rollbahneingabeoberfläche (400) in einem Luftfahrzeug, umfassend:
Empfangen einer Identifizierung eines Flughafens durch einen Prozessor (120);
Generieren der datenbankgesteuerten Rollbahneingabeoberfläche, die eine datenbankgesteuerte Tastatureingabeoberfläche (420) umfasst, durch den Prozessor, wobei die datenbankgesteuerte Tastatureingabeoberfläche eine intelligente Tastatur (470), die dafür ausgelegt ist, ungültige Eingaben basierend auf Flughafeninformationen, die mit dem identifizierten Flughafen in einer Datenbank assoziiert sind, zu verhindern, umfasst;
Anzeigen der datenbankgesteuerten Rollbahneingabeoberfläche auf dem Touchscreen-Display durch den Prozessor, wobei die intelligente Tastatur nur eine oder mehrere gültige Eingabetasten basierend auf einem aktuellen Ort und einer Bewegungsrichtung des Luftfahrzeugs freigibt;
Empfangen einer Eingabe vom Touchscreen-Display durch den Prozessor;
Ermitteln von gültigen, späteren Flughafenorten und Anweisungen basierend auf den Flughafeninformationen in der Datenbank;
dynamisches Aktualisieren der datenbankgesteuerten Tastatureingabeoberfläche basierend auf der Eingabe in das Touchscreen-Display, wenn die Rollbahneingabe unvollständig ist.

## Revendications

1. Dispositif d'entrée (110) à bord d'un aéronef, comprenant :
une mémoire (130) configurée pour stocker une base de données comprenant des informations d'aéroport ;
un affichage à écran tactile (160) ; et
un processeur (120) couplé en communication à l'affichage à écran tactile et au système de base de données, le processeur étant configuré pour :
générer une interface d'entrée de voie de circulation pilotée par base de données comprenant une interface d'entrée par clavier pilotée par base de données (420), l'interface d'entrée par clavier pilotée par base de données comprenant un clavier intelligent (470) configuré pour empêcher une entrée invalide sur la base des informations d'aéroport dans la base de données ;
afficher l'interface d'entrée de voie de circulation pilotée par base de données sur l'affichage à écran tactile, le clavier intelligent n'activant qu'une ou plusieurs touches d'entrée valide sur la base d'une localisation actuelle et d'une direction de déplacement de l'aéronef ;
recevoir une entrée depuis l'affichage à écran tactile ;
déterminer des localisations d'aéroport et instructions subséquentes valides sur la base des informations d'aéroport dans la base de données ;
mettre à jour dynamiquement l'interface d'entrée par clavier pilotée par base de données sur la base de l'entrée appliquée à l'affichage à écran tactile si l'entrée de voie de circulation est incomplète.

2. Dispositif d'entrée selon la revendication 1, dans lequel le processeur est configuré en outre pour empêcher une entrée invalide sur la base des informations d'aéroport dans la base de données en désactivant une ou plusieurs touches du clavier intelligent qui ne correspondent pas à une localisation d'aéroport valide des informations d'aéroport.

3. Dispositif d'entrée selon la revendication 1, dans lequel le processeur est configuré en outre pour empêcher une entrée invalide sur la base des informations d'aéroport dans la base de données en supprimant une ou plusieurs touches du clavier intelligent qui ne correspondent pas à une localisation d'aéroport valide des informations d'aéroport.

4. Dispositif d'entrée selon la revendication 3, dans lequel le processeur est configuré en outre pour agrandir des touches restantes du clavier intelligent.

5. Dispositif d'entrée selon la revendication 1, dans lequel le processeur est configuré en outre pour générer une ou plusieurs touches rapides sur la base des informations d'aéroport stockées dans la base de données.

6. Dispositif d'entrée selon la revendication 1, dans lequel le processeur est configuré en outre pour générer, en réponse à la réception de l'entrée depuis l'affichage à écran tactile, une ou plusieurs saisies en autocomplétion identifiant une ou plusieurs localisations sur la base des informations d'aéroport dans la base de données.

7. Dispositif d'entrée selon la revendication 1, dans lequel le processeur est configuré en outre pour :
recevoir, depuis l'affichage à écran tactile, une sélection d'un aéroport spécifique ; et
générer l'interface d'entrée de voie de circulation pilotée par base de données sur la base d'informations d'aéroport dans la base de données correspondant à l'aéroport spécifique.

8. Dispositif d'entrée selon la revendication 1, dans lequel l'interface d'entrée de voie de circulation pilotée par base de données comprend en outre une interface d'entrée de carte pilotée par base de données comprenant une carte d'un aéroport et une pluralité d'étiquettes sélectionnables correspondant chacune à une localisation différente à l'aéroport selon les informations d'aéroport dans la base de données.

9. Dispositif d'entrée selon la revendication 1, dans lequel le processeur est configuré en outre pour suivre un cheminement par voie de circulation sur la base d'une entrée par écran tactile appliquée à l'interface d'entrée de carte pilotée par base de données et de l'interface d'entrée par clavier pilotée par base de données.

10. Procédé d'exploitation d'une interface d'entrée de voie de circulation pilotée par base de données (400) à bord d'un aéronef, comprenant :
la réception, par un processeur (120), d'une identification d'un aéroport ;
la génération, par le processeur, de l'interface d'entrée de voie de circulation pilotée par base de données comprenant une interface d'entrée par clavier pilotée par base de données (420), l'interface d'entrée par clavier pilotée par base de données comprenant un clavier intelligent (470) configuré pour empêcher une entrée invalide sur la base d'informations d'aéroport associées à l'aéroport identifié dans une base de données ;
l'affichage, par le processeur, de l'interface d'entrée de voie de circulation pilotée par base de données sur l'affichage à écran tactile, le clavier intelligent n'activant qu'une ou plusieurs touches d'entrée valide sur la base d'une localisation actuelle et d'une direction de déplacement de l'aéronef ;
la réception, par le processeur, d'une entrée depuis l'affichage à écran tactile ;
la détermination de localisations d'aéroport et instructions subséquentes valides sur la base des informations d'aéroport dans la base de données ;
la mise à jour dynamique de l'interface d'entrée par clavier pilotée par base de données sur la base de l'entrée appliquée à l'affichage à écran tactile si l'entrée de voie de circulation est incomplète.
